# EUROPÄISCHE PATENTSCHRIFT

(11) **EP 2 423 643 B1**
(45) Veröffentlichungstag und Bekanntmachung des Hinweises auf die Patenterteilung: **30.09.2015**
(21) Anmeldenummer: 11006135.5
(22) Anmeldetag: 26.07.2011
(51) Int. Cl.: G01C 21/34, G01C 21/36

(54) **Technik zur bildschirmbasierten Routenmanipulation**
Technique for monitor-based route manipulation
Technique de manipulation de routes basée sur un écran

(30) Priorität: 25.08.2010 DE 102010035373
(43) Veröffentlichungstag der Anmeldung: 29.02.2012
(73) Patentinhaber: Elektrobit Automotive GmbH, 91058 Erlangen (DE)
(72) Erfinder: Iaccarino, Silvio, 91058 Erlangen (DE)
(74) Vertreter: Röthinger, Rainer

(56) Entgegenhaltungen:
- EP-A1- 1 357 359
- EP-A1- 2 131 150
- DE-A1- 19 928 295
- DE-A1-102005 057 096

## Beschreibung

### Technisches Gebiet

Die vorliegende Erfindung betrifft ganz allgemein die Manipulation von Routen im Rahmen einer Routenplanung oder Routenführung. Insbesondere betrifft die Erfindung eine Technik zur Manipulation einer Route an einem Bildschirm.

### Stand der Technik

Durch Eingabe eines Start- und Zielpunkts ermittelt ein Navigationsgerät oder Routenplaner auf Basis digitaler kartographischer Daten eine "sinnvolle Route" zwischen dem eingegebenen Start- und Zielpunkt. Mit "sinnvoller Route" ist in der Regel jene Route mit der kürzesten Reisezeit oder dem kürzesten Reiseweg gemeint.

Die berechnete Route wird als Graph aus Knoten und Kanten ermittelt, wobei den Knoten in der Regel Straßenkreuzungen bzw. Abzweigungen und den Kanten Stra-βensegmente zwischen benachbarten Straßenkreuzungen bzw. Abzweigungen entsprechen. Straßensegmente können dabei durch zusätzliche Parameter, wie beispielsweise die Länge, den Straßentyp, die maximal zulässige Fahrtgeschwindigkeit usw. charakterisiert sein. Anhand dieser Parameter werden für die Straßensegmente Gewichte berechnet, auf deren Basis dann die Route berechnet wird. Solche Gewichte können den Straßensegmenten aber auch bereits in den kartographischen Daten fest zugewiesen sein.

Beim Planen einer Route besteht häufig das Bedürfnis, eine vorausberechnete Route nachträglich zu manipulieren. Beispielsweise können für einen Nutzer Orte in der Nähe der vorausberechneten Reiseroute von Interesse sein, um einen Zwischenstopp einzulegen. Es ist aber auch vorstellbar, dass ein Nutzer weniger befahrene Straßen entlang der Reiseroute den vom Navigationsgerät oder Routenplaner vorgegebenen Straßen (z.B. Autobahnen) bevorzugt. Hierbei kann die Planung durch Eingabe einzelner Zwischenziele recht mühsam werden.

Eine Vereinfachung der Routenplanung wird dadurch erreicht (vgl. Google maps), indem die am Bildschirm angezeigte Route mit Hilfe eines Cursors graphisch bearbeitbar gemacht wird. Hierbei wird mit Hilfe des Cursors ein entsprechender Punkt auf der vorausberechneten Route markiert und an eine andere Position der Karte gezogen. Die Route wird dann entsprechend der neuen Position des Punktes angepasst. Ein Nachteil dieses Verfahrens besteht darin, dass der Cursor mit der angezeigten Route am Bildschirm zur Deckung gebracht werden muss, um eine Modifizierung durchführen zu können.

EP 1 357 259 A1 lehrt eine Routenmanipulationstechnik, welche auf einer Verschiebung einer an einem Bildschirm angezeigten Markierung basiert. Durch Verschiebung der Markierung kann ein Routen-Zwischenziel am Bildschirm ausgewählt werden. Ferner wird zwischen Startpunkt und Zwischenziel sowie zwischen Zwischenziel und Endpunkt der Route ein Routenkorridor vorgegebener Breite festgelegt, innerhalb dem Gewichte von Straßensegmenten derart modifiziert werden, dass die manipulierte Route innerhalb des Routenkorridors verläuft.

### Kurzer Abriss

Aufgabe der vorliegenden *Erfindung* ist es, *ein Verfahren* und eine Vorrichtung bereitzustellen, welche ein Manipulieren von vorausberechneten Routen vereinfachen.

Hierfür wird ein Verfahren zum Manipulieren einer mittels kartographischer Daten vorausberechneten Route an einem Bildschirm bereitgestellt, wobei die kartographischen Daten Straßensegmente umfassen, denen Gewichte für die Routenberechnung zuordenbar sind, wobei das Verfahren die folgenden Schritte umfasst: Detektieren einer ausgewählten Bildschirmposition (P) und einer Zeitdauer (t) einer Auswahloperation an der Bildschirmposition (P); Modifizieren von Gewichten der Straßensegmente in Abhängigkeit der detektierten Bildschirmposition (P) und der Zeitdauer (t); und Berechnen einer bezüglich der vorausberechneten Route manipulierten Route auf Basis der modifizierten Gewichte.

Die Modifizierung der Gewichte der Straßensegmente kann von einer Entfernung (d₁) der Straßensegmente zur ausgewählten Bildschirmposition (P) abhängen. Gemäß einer Ausführung werden die Straßensegmente mit zunehmender Entfernung (d₁) zur Bildschirmposition (P) zunehmend "bestraft". "Bestraft" bedeutet in diesem Zusammenhang, dass die modifizierten Gewichte der Straßensegmente Werte aufweisen, welche für das Berechnen der Route ungünstig sind und daher auf Kosten anderer Straßensegmente nicht berücksichtigt werden. Somit werden Straßensegmente in unmittelbarere Nähe zur Bildschirmposition (P) jenen mit größerer Entfernung (d₁) beim Berechnen der manipulierten Route bevorzugt.

Die Stärke des Modifizierens der Gewichte kann mit der Entfernung (d₁) zur Bildschirmposition (P) zunehmen. Erfolgt eine Berechnung einer Route auf Basis der kleinsten Gewichte von Straßensegmenten, so werden die Gewichte derart modifiziert, dass der Wert der modifizierten Gewichte mit zunehmender Entfernung (d₁) ansteigt. Der entfernungsabhängige Anstieg der modifizierten Werte der Gewichte kommt einer Bestrafung der Straßensegmente gleich. Hierfür werden die ursprünglich berechneten oder zugeordneten Gewichte der Straßensegmente mit einem entfernungsabhängigen Parameter multipliziert oder addiert werden. Die entfernungsabhängige Stärke der Modifizierung der Gewichte kann mit der Entfernung (d₁) gemäß einem Potenzgesetz oder in einem anderen funktionalen Zusammenhang ansteigen.

Das Modifizieren der Gewichte von Straßensegmenten kann zusätzlich von einer Entfernung (d₂) der Straßensegmente zu einem Zielpunkt der vorausberechneten Route abhängen. Die in Abhängigkeit der detektierten Bildschirmposition (P) und Zeitdauer (t) ausgeführte Modifikation von Gewichten wird dabei beispielsweise bei all jenen Straßensegmenten abgeschwächt oder korrigiert, welche eine geringe Entfernung zum Zielpunkt aufweisen. Der Grad der Abschwächung oder Korrektur kann mit abnehmenden Entfernung (d₂) zunehmen. Auf diese Weise wird sichergestellt, dass manipulierte Routen nicht von einem Zielpunkt weggeführt werden.

Die Stärke der Routenmanipulation kann ferner von der Entfernung der Bildschirmposition (P) zu einem Start- bzw. dem Zielpunkt abhängen. Beispielsweise kann das Modifizieren der Gewichte und somit das Manipulieren der Route mit abnehmender Entfernung der Bildschirmposition P zum Start- bzw. Zielpunkt abnehmen.

Ferner kann durch die Zeitdauer (t) der Auswahloperation die Stärke des Modifizierens der Gewichte und somit die Stärke der Routenmanipulation bestimmt sein. Die Stärke des Modifizierens kann direkt proportional zur Zeitdauer (t) sein. In einer alternativen Ausführung kann die Stärke des Modifizierens mit der Zeitdauer (t) exponentiell oder in einem anderen funktionalen Zusammenhang ansteigen. Über die Zeitdauer (t) kann ein Offset-Wert für das Modifizieren der Gewichte eingestellt werden. Dabei können die modifizierenden Gewichte bezüglich der ursprünglichen Gewichte um einen Offset-Wert erniedrigt sein. Gemäß einer Ausführung (und abhängig vom verwendeten Routen-Algorithmus) können die modifizierten Gewichte auch negative Werte annehmen.

Die zeit- und/oder entfernungsabhängig modifizierten Gewichte der Routensegmente können durch einen vorgegebenen unteren und/oder oberen Schwellenwert derart begrenzt werden, dass jedes modifizierte Routensegment auch weiter bei der Berechnung der Route mit einbezogen werden kann. Die vorgegebenen Schwellenwerte hängen dabei vom verwendeten Routen-Algorithmus ab.

Über die Zeitdauer (t) kann zusätzlich oder alternativ zur Stärke des Modifizierens ein kartographischer Bereich in der Umgebung der ausgewählten Bildschirmposition (P) definiert werden, innerhalb dessen die Gewichte von Straßensegmenten modifiziert werden. Auf diese Weise wird das Modifizieren auf all jene Straßensegmente beschränkt, welche innerhalb des kartographischer Bereichs liegen. Die Ausdehnung des kartographischen Bereichs kann beispielsweise direkt proportional zur Zeitdauer (t) der Auswahloperation sein. Je länger die Auswahloperation andauert, desto größer wird der kartographische Bereich, innerhalb dessen Straßensegmente einer am Bildschirm visualisierten Karte oder Ausschnitte davon modifiziert werden. Die Ausdehnung des kartographischen Bereichs kann hierbei auf die am Bildschirm dargestellte Karte begrenzt sein.

Gemäß einer Ausführung werden bei der Berechnung der manipulierten Route jene Straßensegmente bevorzugt, welchen die kleinsten Gewichte zugeordnet sind. Dabei können die ursprünglich berechneten oder zugeordneten Gewichte der Straßensegmente innerhalb des kartographischen Bereichs in Abhängigkeit der Zeitdauer (t) derart modifiziert werden, dass sie einen bezüglich der ursprünglichen Gewichte kleineren Wert aufweisen. Auf diese Weise kann über die Zeitdauer (t) eine vorausberechnete Route von einem Startpunkt zu einem Zielpunkt dahingehend manipuliert werden, dass sie ausgehend vom Startpunkt über den die Bildschirmposition (P) umgebenden kartographischen Bereich zur Zielposition führt. Durch die ausgewählte Bildschirmposition (P) wird die Richtung und durch die Zeitdauer (t) die Stärke der Abweichung der manipulierten Route von der vorausberechneten Route vorgegeben. Eine vorausberechnete Route kann dadurch auf einfache Weise graphisch manipuliert werden.

Gemäß einer weiteren Ausführung kann die ausgewählte Bildschirmposition (P) als Zwischenziel in die Route aufgenommen werden, wenn die manipulierte Route die ausgewählte Bildschirmposition (P) erreicht hat. Ferner können weitere Bildschirmpositionen (P) manuell ausgewählt werden, um weitere Manipulationen der Route durchzuführen oder weitere Zwischenpunkte der manipulierten Route hinzuzufügen.

In Verbindung mit der Bildschirmposition (P) kann ein Korridor am Bildschirm ausgewählt werden, indem ein zusammenhängender Bildschirmbereich zwischen einer Bildschirmposition A und einer Bildschirmposition B manuell markiert wird. Die Stärke der Routenmanipulation kann hierbei durch die Zeitdauer (t) der Markierung an der Bildschirmposition B vorgegeben werden. Die manipulierte Route wird dann bezüglich des ausgewählten Korridors am Bildschirm berechnet.

Die manipulierte Route, zusätzliche Informationen zur manipulierten Route, die ausgewählte Bildschirmposition (P) und/oder die Ausdehnung des kartographischen Bereichs können am Bildschirm dargestellt werden. Hierbei können die zusätzlichen Informationen beispielsweise Streckenlängenangaben, Ortsnamen usw. umfassen. Die Entwicklung der manipulierten Route kann in Echtzeit angezeigt werden. Ferner ist auch denkbar, dass die ausgewählte Bildschirmposition (P) sowie die Modifizierungsstärke innerhalb des kartographischen Bereichs durch Farbkontraste am Bildschirm dargestellt werden. Auf diese Weise kann ein Nutzer die Entwicklung der Routenmanipulation überprüfen und seinen Auswahlvorgang am Bildschirm entsprechend steuern.

Gemäß einer weiteren Ausführung kann durch die Auswahloperation an der Bildschirmposition (P) die am Bildschirm dargestellte Karte gleichzeitig mit und in Abhängigkeit von der Routenmanipulation skaliert werden. Die Skalierung der dargestellten Karte folgt dabei der manipulierten Route, welche sich mit zunehmender Zeitdauer (t) immer mehr der Bildschirmposition (P) annähert. Auf diese Weise kann beispielsweise die Karte in der Umgebung der Bildschirmposition (P) vergrößert und immer detaillierter dargestellt werden, so dass der Nutzer die Manipulation der Route in der Nähe der Bildschirmposition besser steuern kann. Dies gilt insbesondere dann, wenn die anfänglich dargestellte Karte mit der vorausberechneten Route eine kleine Skalierung aufweist in der nur die wichtigsten Straßen, wie beispielsweise Autobahnen, und größere Städte dargestellt sind. Durch Auswahl einer Bildschirmposition (P) kann hierbei der Nutzer zunächst grob die Richtung für die Manipulation der vorausberechneten Route vorgeben und anschließend anhand der vergrößerten Kartenausschnitte einzelne, ursprünglich nicht dargestellte Straßen für die manipulierte Route festlegen. Das Festlegen einer oder mehrerer Straßen am vergrößerten Kartenausschnitt kann optional durch Auswählen weiterer Bildschirmpositionen (P) erfolgen.

Für die Darstellung der Routen sowie die Auswahl der Bildschirmposition (P) kann ein berührungsempfindlicher Bildschirm verwendet werden. Auf diese Weise kann durch Berühren des Bildschirms eine Auswahloperation zum Manipulieren der vorausberechneten Route durchgeführt werden. Alternativ kann eine Auswahloperation auch mittels einer Maus, einen Joystick oder andere Eingabemittel durchgeführt werden.

Ferner ist ein Computerprogrammprodukt mit Programmcode zum Durchführen des Verfahrens vorgesehen, wenn das Computerprogrammprodukt auf einer Computereinrichtung (z.B. ein Navigationsgerät) ausgeführt wird. Das Computerprogrammprodukt kann hierfür auf einem computerlesbaren Aufzeichnungsmedium (z.B., einer Speicherkarte oder einem Festspeicher) abgespeichert sein.

Weiterhin ist eine Vorrichtung zum Manipulieren einer mittels kartographischer Daten vorausberechneten Route an einem Bildschirm vorgesehen, wobei die kartographischen Daten Straßensegmente umfassen, denen Gewichte für die Routenberechnung zuordenbar sind, wobei die Vorrichtung umfasst: eine Einrichtung, die dazu eingerichtet ist, eine ausgewählte Bildschirmposition (P) und eine Zeitdauer (t) einer Auswahloperation an der Bildschirmposition (P) zu detektieren; eine Einrichtung zum Modifizieren von Gewichten der Straßensegmente in Abhängigkeit der detektierten Bildschirmposition (P) und der Zeitdauer (t) der Auswahloperation; und eine Einrichtung zum Berechnen einer zur vorausberechneten Route manipulierten Route auf Basis der modifizierten Gewichte.

Gemäß einer Ausführung kann die Vorrichtung ferner einen Datenspeicher zur Speicherung kartographischer Daten umfassen und einen Bildschirm zum Darstellen der manipulierten Route, der ausgewählten Bildschirmposition (P) und/oder eines kartographischen Bereichs. Ferner kann der Bildschirm ein berührungsempfindlicher Bildschirm sein.

Außerdem ist ein Navigationsgerät vorgesehen, welches die Vorrichtung zum Manipulieren einer vorausberechneten Route an einem Bildschirm umfasst.

### Kurze Beschreibung der Zeichnungen

Weitere Einzelheiten, Aspekte und Vorteile der hier beschriebenen Erfindung ergeben sich aus den nachfolgenden Zeichnungen. Es zeigen:
- Fig. 1: eine Vorrichtung gemäß einem Ausführungsbeispiel der vorliegenden Erfindung;
- Fig. 2: eine schematische Darstellung eines Verfahrens gemäß einem Ausführungsbeispiel der vorliegenden Erfindung; und
- Fig. 3: eine Darstellung einer Abfolge von Routenmanipulationen gemäß dem vorliegenden Verfahren.

### Detaillierte Beschreibung

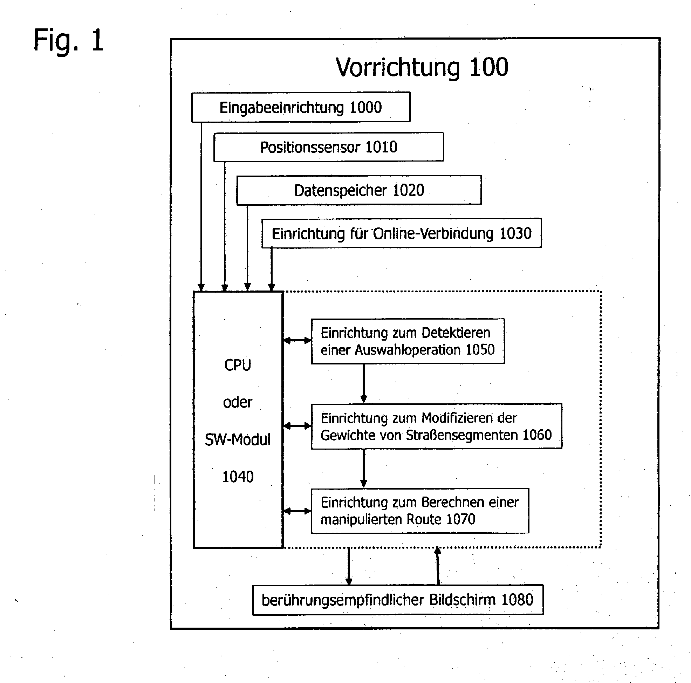

Fig. 1 zeigt in Form eines Blockdiagramms ein Ausführungsbeispiel einer erfindungsgemäßen Vorrichtung 100 zum Manipulieren einer mittels kartographischer Daten vorausberechneten Route an einem Bildschirm. Die Vorrichtung kann Teil eines Navigationsgeräts, eines Mobiltelephons, eines Smart Phones oder eines Personal Digital Assistent (PDA) sein. Die Vorrichtung 100 kann auch fest in einem Fahrzeug verbaut oder als tragbare Einheit (Personal Navigation Device, PND) ausgebildet sein.

Die Vorrichtung 100 umfasst eine Eingabeeinrichtung 1000, einen Positionssensor 1010, einen Datenspeicher 1020, eine Einrichtung zum Aufbau einer Online-Verbindung 1030 und einen berührungsempfindlichen Bildschirm 1080. Die Vorrichtung 100 umfasst ferner eine Kernfunktionalität 1040 in Form einer zentralen Verarbeitungseinheit (Central Processing Unit, CPU) oder eines Mikroprozessors oder in Form eines Software-Moduls (SW-Modul), eine Einrichtung 1050 zum Detektieren einer Auswahloperation, eine Einrichtung 1060 zum Modifizieren der Gewichte von Straßensegmenten sowie eine Einrichtung 1070 zum Berechnen einer manipulierten Route. Die Einrichtungen 1050, 1060 und 1070 können als eigenständige Einrichtungen ausgebildet sein oder alternativ hierzu in der Kernfunktionalität 1040 als Teileinheit integriert sein, wie in Fig. 1 durch den gestrichelten Linienverlauf angedeutet ist.

Die Eingabeeinrichtung 1000, der Positionssensor 1010, der Datenspeicher 1020, die Einrichtung zum Aufbau einer Online-Verbindung 1030 sowie der berührungsempfindliche Bildschirm 1080 stehen in kommunizierender Verbindung mit der Kernfunktionalität 1040.

Die Eingabeeinrichtung 1000 ist dazu ausgebildet, Eingaben über einen Startpunkt, einen Zielpunkt, Zwischenstopps, weitere relevante Routen-Anweisungen und/oder Parameter (z.B. Vorgabe von Straßentypen, usw.) der Kernfunktionalität 1040 zur Verfügung zu stellen. Die Eingabe von routenrelevanten Daten kann durch Betätigen von Eingabetasten und/oder akustisch, wie beispielsweise durch Mitteilung von Ortsnamen, Straßennamen usw., vorgenommen werden. Ferner bezieht die Kernfunktionalität 1040 über den Positionssensor 1010 (z.B. einen GPS-Sensor) aktuelle Positionsinformationen, die auch den Startpunkt definieren können.

Im Datenspeicher 1020 sind z.B. in einer in Datenbank kartographische Daten abgespeichert, auf deren Basis eine Route zwischen einem Start- und Zielpunkt berechnet wird. Die kartographischen Daten umfassen gegebenenfalls Informationen zur Länge, zur erlaubten Höchstgeschwindigkeit, zum Straßentyp, zu Baumaßnahmen, usw. von Straßensegmenten und/oder vordefinierte Gewichte der Straßensegmente, welche bei der Berechnung einer Route evaluiert werden.

Zusätzlich (oder gegebenenfalls alternativ) zum Datenspeicher 1020 umfasst die Vorrichtung 100 eine Einrichtung 1030 zum Aufbau einer Online-Verbindung (z.B. GPRS-Verbindung), um kartographische Daten von einem zentralen Server für die Berechnung einer Route zu beziehen. Der Vorteil der Verwendung von Online-Daten liegt darin, dass Daten mit aktualisierten Eigenschaften zu Straßensegmenten und Straßenkreuzungen in die Berechnung der Route einfließen. Ferner können über die Online-Verbindung berechnete Routen bzw. manipulierten Routen online zur Verfügung gestellt werden.

Der berührungsempfindliche Bildschirm 1080 ist dazu ausgelegt, ausgewählte kartographische Daten einem Nutzer visuell zur Verfügung zu stellen. Neben dieser Ausgabefunktion kommt dem berührungsempfindlichen Bildschirm 1080 zusätzlich eine Eingabefunktion zu. Gemäß dem vorliegenden Ausführungsbeispiel kann durch Berühren des Bildschirms 1080 eine Bildschirmposition (P) ausgewählt werden, mittels der eine vorausberechnete Route manipuliert wird. Ferner kann der berührungsempfindliche Bildschirm 1080 für die Auswahl von Icons, für die Navigation in Menüs oder Untermenüs, für die Auswahl von Ortsnamen, Straßennamen und Routenparametern vorgesehen sein. Der berührungsempfindliche Bildschirm 1080 kann somit ein zur Eingabeeinrichtung 1000 zusätzliches Eingabemedium darstellen.

Die Einrichtung 1050 zum Detektieren einer Auswahloperation ist dazu ausgebildet, die Bildschirmposition (P) und eine Zeitdauer (t) der Berührung am Bildschirm zu detektieren. Die ermittelten Werte werden dann der Einrichtung 1060 zum Modifizieren der Gewichte von Straßensegmenten zugeführt. Gemäß einer Ausführung gleicht die Einrichtung 1050 die detektierte Zeitdauer (t) mit einem Zeitschwellenwert (T) ab, um zu bewerten, ob eine Auswahloperation für die Manipulation einer Route vorliegt oder nicht. Der Zeitschwellenwert (T) gibt eine Mindestzeitdauer vor, wodurch verhindert wird, dass ein zufälliges Berühren des berührungsempfindlichen Bildschirms 1080 zu einer ungewollten Modifizierung der vorausberechneten Route führt.

Die Einrichtung 1060 zum Modifizieren der Gewichte ist dazu eingerichtet, auf Basis der ermittelten Parameter Bildschirmposition (P) und Zeitdauer (t) die Gewichte von Straßensegmenten zu modifizieren. Sie ist ferner dazu ausgelegt, in Abhängigkeit der detektierten Bildschirmposition (P) und Zeitdauer (t) einen kartographischen Bereich, welcher die ausgewählte Bildschirmposition (P) umgibt, auszuwählen. Die Einrichtung 1060 modifiziert all jene Straßensegmente einer Karte oder Teile davon, welche innerhalb des räumlichen kartographischen Bereichs liegen.

Schließlich ist die Einrichtung 1070 zum Berechnen einer manipulierten Route dazu eingerichtet, auf Basis der mittels der Einrichtung 1060 modifizierten Gewichte eine zur vorausberechneten Route neue Route zwischen dem Start- und Zielpunkt zu berechnen.

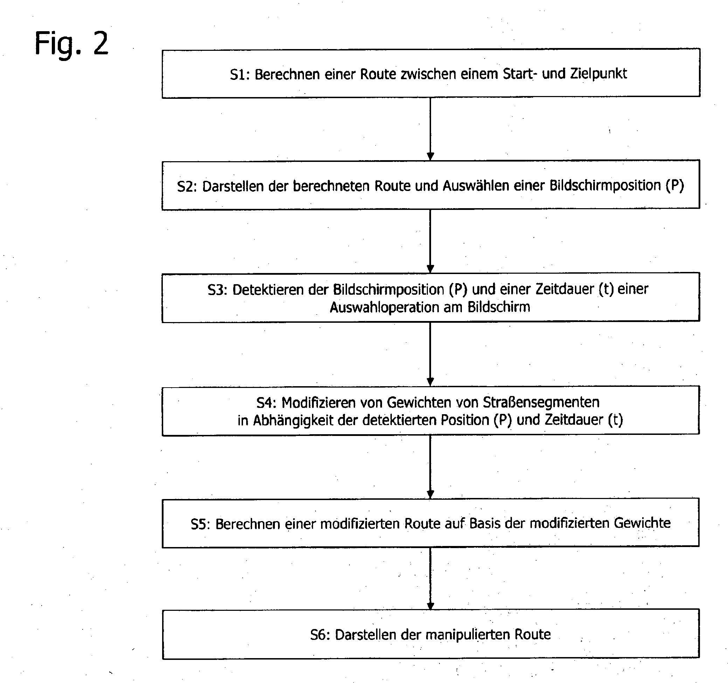

Im Folgenden wird nun unter Bezugnahme auf das in Fig. 2 dargestellte Flussdiagramm ein Ausführungsbeispiel eines erfindungsgemäßen Verfahrens zum Manipulieren einer mittels kartographischer Daten vorausberechneten Route an einem Bildschirm näher beschrieben. Das Verfahren wird anhand der in Fig. 1 dargestellten Vorrichtung 100 erläutert.

In einem ersten Schritt S1 wird auf Basis eines eingegebenen Start- und Zielpunkts eine Route berechnet. Der Startpunkt kann beispielsweise durch den Positionssensor 1010 bestimmt werden. Die Berechnung der Route kann hierbei nach allgemein bekannten Routen-Algorithmen (z.B. Dijkstras-Algorithmus, A*-Algorithmus, andere heuristische Algorithmen) erfolgen und wird daher im Folgenden nicht weiter erläutert. Für die Berechnung der Route werden in einem ersten Schritt (der ggf. auch Offline erfolgen kann) Straßensegmente gewichtet, wobei das Gewicht eines Segments von Parametern, wie z.B. die Segmentlänge, die Zugehörigkeit zu einem Stra-βentyp, die erlaubte Höchstgeschwindigkeit beim Durchfahren des Segments, weitere Straßenbeschaffenheiten des Segments, usw. abhängt. Die detaillierten Eigenschaften der zu den Straßensegmenten korrespondierenden Gewichte, wie beispielsweise die Begrenzung der Werte durch einen oberen und unteren Schwellenwert, die Annahme von negativen Werten usw., hängt von den Details des verwendeten Routen-Algorithmus ab und beeinflusst das vorliegende Ausführungsbeispiel nicht. Bei der Berechnung der Route werden im vorliegenden Ausführungsbeispiel Straßensegmente mit geringerem Gewicht jenen mit höherem Gewicht bevorzugt. Die Berechnung bzw. Berücksichtigung der Gewichte von Straßensegmenten kann dabei durch Eingabe von Routenkriterien weiter beeinflusst werden. Beispielsweise kann eine Route nach dem Kriterium des kürzesten Reisewegs oder der kürzesten Reisezeit berechnet werden.

In einem zweiten Schritt S2 wird die vorausberechnete Route zwischen dem Start-und Zielpunkt mit Hilfe des Bildschirms 1080 dargestellt. In der Regel wird die vorausberechnete Route vollständig am Bildschirm 1080 dargestellt. Abschnitte der Route können durch herkömmliches Zoomen am Bildschirm 1080 weiter ausgewählt werden. Durch Berühren des berührungsempfindlichen Bildschirms 1080 wählt ein Nutzer eine Bildschirmposition (P) aus, bezüglich der die Gewichte der Straßensegmente der am Bildschirm 1080 dargestellten Karte modifiziert werden können.

In einem darauffolgenden Schritt S3 wird die ausgewählte Bildschirmposition (P) sowie die Zeitdauer (t) der Berührung am Bildschirm 1080 detektiert. Die Zeitdauer (t) kann hierbei kontinuierlich während des Berührungsvorgangs detektiert werden, um eine Routenmanipulation in Echtzeit zu ermöglichen. Bei der Auswahl einer Bildschirmposition (P), etwa mittels eines Fingers, wird in der Regel anstelle einer exakten Bildschirmposition (P) ein Bereich mit einer gewissen Ausdehnung markiert, wobei die Ausdehnung von der Fingergröße abhängen kann. Gemäß einer Ausführung wird aus dem markierten Bereich ein Schwerpunkt ermittelt, welcher als Bildschirmposition (P) identifiziert wird, auf deren Basis dann das Modifizieren der Gewichte der Straßensegmente vorgenommen wird.

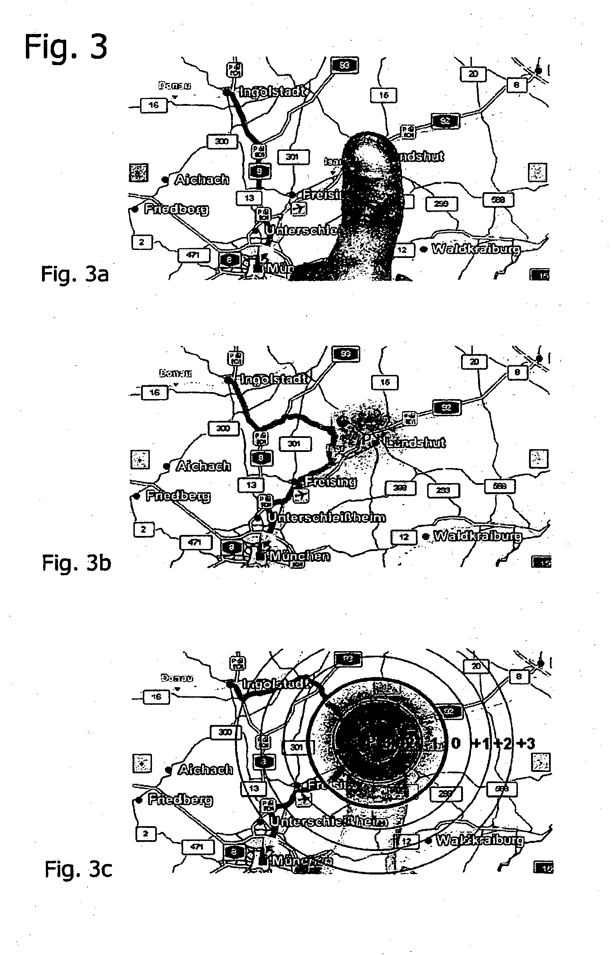

In einem Schritt S4 wird in Abhängigkeit der detektierten Parameter Bildschirmposition (P) und Zeitdauer (t) die Gewichte der Straßensegmente entfernungsabhängig und zeitabhängig modifiziert. Die Zeitdauer (t) bestimmt im Wesentlichen die Stärke des Modifizierens der Gewichte und somit die Stärke der Routenmanipulation. Über die Zeitdauer (t) kann ferner eine Größe des kartographischen Bereichs festgelegt werden. Er ist dazu vorgesehen, das Modifizieren auf all jene Straßensegmente einzuschränken, welche innerhalb des kartographischen Bereichs liegen. Mittels der Bildschirmposition (P) wird eine Entfernung (d₁) zu den zu modifizierenden Segmenten ermittelt. Abhängig von der ermittelten Entfernung (d₁) werden die Gewichte der Straßensegmente geändert. Somit dient die Festlegung der Bildschirmposition (P) relativ zu der vorausberechneten Route dazu, die Route in Richtung der ausgewählten Bildschirmposition (P) zu manipulieren. Eine detaillierte Beschreibung hierzu wird anhand von Fig. 3 weiter unten gegeben.

In Schritt S5 wird anschließend auf Basis der modifizierten Gewichte die vorausberechnete Route neu berechnet. Bei der Berechnung werden jene Straßensegmente mit dem geringsten Gewicht bevorzugt. Die Berechnung erfolgt hierbei in Echtzeit auf Basis der kontinuierlich detektierten Zeitdauer (t). Im anschließenden Schritt S6 wird die manipulierte Route am berührungsempfindlichen Bildschirm 1080 für den Nutzer dargestellt. Die Darstellung der manipulierten Route kann ebenso in Echtzeit erfolgen.

Anhand von Fig. 3 wird die Entwicklung der Routenmanipulation am Bildschirm 1080 in Abhängigkeit der Parameter Bildschirmposition (P) und Zeitdauer (t) dargestellt. Fig. 3a zeigt zunächst eine vorausberechnete Route zwischen den Städten München und Ingolstadt. Die vorausberechnete Route stellt hierbei eine Route mit der kürzesten Reisezeit dar.

Am berührungsempfindlichen Bildschirm 1080 wird durch Berühren mit einem Finger die Bildschirmposition (P) ausgewählt. Wie aus Fig. 3b ersichtlich wird im vorliegenden Ausführungsbeispiel eine Bildschirmposition (P) ausgewählt, welche dem kartographischen Ort Landshut entspricht. Es sei hier erwähnt, dass die hier vorgestellte Technik nicht von der Zuordnung einer ausgewählten Bildschirmposition (P) zu einem kartographischen Ort abhängt. Wichtig für die Routenmanipulation sind in erster Linie die Entfernungen (d₁) der Straßensegmente zur Bildschirmposition (P). Hierbei werden die Gewichte der Straßensegmente entfernungsabhängig derart modifiziert, dass die Beträge der modifizierten Gewichte beginnend von der Bildschirmposition (P) mit zunehmender Entfernung nach außen hin zunehmen. Die entfernungsabhängige Zunahme der modifizierten Gewichte kommt einer zunehmenden "Bestrafung" der Straßensegmente gleich, d.h. Straßensegmente mit zunehmender Entfernung zur Bildschirmposition (P) werden bei der Berechnung der Route immer weniger berücksichtigt. Die entfernungsabhängige Zunahme der Gewichte bzw. die entfernungsabhängige Änderung der Gewichte kann einem Potenzgesetz folgen.

Zusätzlich zum entfernungsabhängigen Modifizieren wird durch die Zeitdauer (t) eine Stärke (Absolutbetrag) des Modifizierens der Gewichte bestimmt, wobei die Stärke des Modifizierens direkt proportional mit der Zunahme der Zeitdauer (t) anwächst. Über die Zeitdauer (t) kann somit ein Offset-Wert oder ein Multiplikationsfaktor für das Modifizieren festgelegt werden, bezüglich dem die modifizierten Gewichte relativ zu den ursprünglich berechneten oder zugeordneten Gewichten verringert werden. Hierbei können die modifizierten Gewichte auch negative Werte annehmen. Durch das entfernungs- und zeitabhängige Modifizieren entsteht eine radialsymmetrische "Potenzialmulde" für die Gewichte, wobei das Zentrum der Potenzialmulde durch die Bildschirmposition (P) vorgegeben ist.

Über die Zeitdauer (t) wird ferner der kartographische Bereich um die ausgewählte Bildschirmposition (P) festgelegt, innerhalb der sich die oben beschriebene Potenzialmulde weiter entwickelt. Mit anderen Worten bleibt das Modifizieren der Gewichte auf den kartographischen Bereich um die ausgewählte Bildschirmposition (P) beschränkt. Der kartographische Bereich dehnt sich ausgehend von der Bildschirmposition (P) mit zunehmender Zeitdauer (t) ähnlich einer Kugelwelle immer weiter aus. Die Ausdehnung ist dabei proportional zur Zeitdauer (t). Gleichzeitig wächst mit der Zeitdauer (t) die Stärke des Modifizierens an. Es entsteht somit mit zunehmender Zeitdauer (t) ein kontinuierlich zunehmender kartographischer Bereich, in dem die Amplitude der Potenzialmulde zunimmt. Auf diese Weise werden mit zunehmender Zeitdauer (t) immer mehr Straßensegmente in der Umgebung der vorausberechneten Route oder der Route selbst von der Potenzialmulde erfasst und modifiziert.

In den Fign. 3b und 3c ist die Entwicklung der Potenzialmulde mit zunehmender Zeitdauer (t) sowie der Einfluss der Potenzialmulde auf die Entwicklung der Routenmanipulation dargestellt. Dabei ist in Fig. 3b nur jener Teil des kartographischen Bereichs grau hinterlegt, innerhalb dem der Wert der modifizierten Gewichte in Bezug auf die ursprünglichen Gewichte verringert wird. In Fig. 3c ist der gesamte kartographische Bereich, innerhalb dessen Gewichte modifiziert werden, dargestellt, wobei jener Bereich, bei dem die Gewichte verringert werden, wieder grau hinterlegt ist. Die konzentrischen Kreise markieren im Bild der Potenzialmulde Äquipotenzialflächen. Die angegebenen Werte symbolisieren jeweils die Stärke der Modifizierung der Straßensegmente innerhalb einer Äquipotenzialfläche, wobei die negativen Werte einer Verringerung und die positiven Werte einer Erhöhung der ursprünglichen Gewichte entsprechen.

Es sei darauf hingewiesen, dass die in Fig. 3c angegebenen Werte für das Modifizieren der Gewichte sowie die konzentrisch dargestellten Äquipotenzialflächen nur zur Erklärung des vorliegenden Ausführungsbeispiels dienen und das Ausführungsbeispiel nicht darauf beschränkt ist. Beispielsweise kann der Übergang im kartographischen Bereich von einem Bereich mit negativen Werten zu einem Bereich mit positiven Werten durch einen Offset-Wert beliebig verschoben werden. Ferner kann die Stärke und Entfernungsabhängigkeit des Modifizierens der Gewichte dem verwendeten Routen-Algorithmus angepasst werden.

Fig. 3b zeigt die Manipulation der vorausberechneten Route München-Ingolstadt nach einer ersten Zeitdauer (t₁). Hierbei werden die Gewichte aller Straßensegmente innerhalb eines der Zeitdauer (t₁) proportionalen kartographischen Bereichs modifiziert. Die Gewichte von Straßensegmenten in der Umgebung der Bildschirmposition (P) werden verringert (grau unterlegter Bereich), wohingegen Straßensegmente in der Nähe der Route und auf Abschnitten der Route entfernungsabhängig von der Bildschirmposition (P) (stark) erhöht (bestraft) werden. Dadurch bildet die vorausberechnete "direkte" Route zwischen München und Ingolstadt keine günstige Route mehr, da die Summe der Gewichte dieser Route nun höher ist als die einer Route, welche lokal in Richtung Landshut umgeleitet wird. Durch weiteres Berühren der Bildschirmposition (P) nimmt die Zeitdauer (t) und die Potenzialmulde weiter zu. Fig. 3c zeigt die Routenmanipulation nach einer zweiten Zeitdauer (t₂). Im Vergleich zu Fig. 3b nimmt der kartographische Bereich um der Bildschirmposition (P) und mit ihm der Bereich, in welchem der Wert der modifizierten Gewichte erniedrigt wird, zu. Ferner wächst die Stärke des Modifizierens der Gewichte im kartographischen Bereich an. Dadurch wird die ermittelte Route immer mehr in Richtung der ausgewählten Bildschirmposition (P) gezogen. Mit anderen Worten wird die vorausberechnete Route immer mehr von der Potenzialmulde angezogen. In Fig. 3c läuft nun die manipulierte Route von München nach Ingolstadt über Landshut.

Durch Auswahl der Bildschirmposition (P) und der Zeitdauer (t) kann so jede beliebige vorausberechnete Route oder Teile davon auf einfache und intuitive Weise manipuliert werden, ohne dass dabei Punkte auf der vorausberechneten Route markiert oder anderweitig manipuliert werden müssen. Die Bildschirmposition (P) relativ zur vorausberechneten Route bestimmt die Richtung der Routenmanipulation, die Zeitdauer (t) die Stärke der Routenmanipulation.

Durch die Echtzeit-Darstellung des Manipulationsvorgangs am berührungsempfindlichen Bildschirm 1080 kann der Nutzer den Einfluss der Zeitdauer (t) erkennen und seine Berührung entsprechend steuern. Es versteht sich, dass die hier beschriebene Erfindung nicht auf einen berührungsempfindlichen Bildschirm beschränkt ist. Die Auswahl einer Bildschirmposition kann auch mit Hilfe einer Maus, eines Joysticks oder anderer Eingabemittel erfolgen.

## Patentansprüche

1. Verfahren zum Manipulieren einer mittels kartographischer Daten vorausberechneten Route an einem Bildschirm (1080), wobei die kartographischen Daten Straßensegmente umfassen, denen Gewichte für die Routenberechnung zuordenbar sind, umfassend die folgenden Schritte:
- Detektieren (S3) einer ausgewählten Bildschirmposition (P) und einer Zeitdauer (t) einer Auswahloperation an der Bildschirmposition (P);
- Modifizieren (S4) von Gewichten der Straßensegmente in Abhängigkeit der detektierten Bildschirmposition (P) und der Zeitdauer (t); und
- Berechnen (S5) einer bezüglich der vorausberechneten Route manipulierten Route auf Basis der modifizierten Gewichte.

2. Verfahren nach Anspruch 1, wobei das Modifizieren der Gewichte von einer Entfernung (d₁) der Straßensegmente zur ausgewählten Bildschirmposition (P) abhängt.

3. Verfahren nach Anspruch 2, wobei die Stärke des Modifizierens der Gewichte mit der Entfernung (d₁) der Straßensegmente zur ausgewählten Bildschirmposition (P) zunimmt.

4. Verfahren nach einem der vorhergehenden Ansprüche, wobei das Modifizieren der Gewichte zusätzlich von einer Entfernung (d₂) der Straßensegmente zu einem Zielpunkt der vorausberechneten Route abhängt.

5. Verfahren nach einem der vorhergehenden Ansprüche, wobei die Zeitdauer (t) die Stärke des Modifizierens der Gewichte bestimmt.

6. Verfahren nach einem der vorhergehenden Ansprüche, wobei über die Zeitdauer (t) die Größe eines kartographischen Bereichs in der Umgebung der ausgewählten Bildschirmposition (P) festgelegt wird, innerhalb dessen die Gewichte von Straßensegmenten modifiziert werden.

7. Verfahren nach Anspruch 6, wobei die Ausdehnung des kartographischen Bereichs mit der Zeitdauer (t) anwächst und/oder wobei die Ausdehnung des kartographischen Bereichs auf einen am Bildschirm (1080) dargestellten Kartenausschnitt begrenzt ist.

8. Verfahren nach Anspruch 6 oder 7, wobei die modifizierten Gewichte innerhalb des kartographischen Bereichs einen bezüglich der ursprünglich berechneten Gewichte kleineren Wert aufweisen.

9. Verfahren nach einem der vorhergehenden Ansprüche, wobei beim Berechnen der manipulierten Route jene Straßensegmente bevorzugt werden, welche bezüglich ihrer Gewichte die kleinsten Werte aufweisen.

10. Verfahren nach einem der vorhergehenden Ansprüche, ferner umfassend ein Darstellen (S6) der manipulierten Route, der ausgewählten Bildschirmposition (P) und/oder des die Bildschirmposition (P) umgebenden kartographischen Bereich am Bildschirm (1080); und/oder
ferner umfassend Skalieren der am Bildschirm (1080) dargestellten kartographischen Daten in Abhängigkeit der berechneten manipulierten Route.

11. Verfahren nach einem der vorhergehenden Ansprüche, wobei der Bildschirm (1080) ein berührungsempfindlicher Bildschirm (1080) ist und das Auswählen der Bildschirmposition (P) durch Berühren des Bildschirms (1080) erfolgt.

12. Computerprogrammprodukt mit Programmcode zum Durchführen des Verfahrens nach wenigstens einem der vorhergehenden Ansprüche, wenn das Computerprogrammprodukt auf einer Computereinrichtung ausgeführt wird.

13. Computerprogrammprodukt nach Anspruch 12, welches auf einem computerlesbaren Aufzeichnungsmedium abgespeichert ist.

14. Vorrichtung zum Manipulieren einer mittels kartographischer Daten vorausberechneten Route an einem Bildschirm (1080), wobei die kartographischen Daten Straßensegmente umfassen, denen Gewichte für die Routenberechnung zuordenbar sind, umfassend:
- eine Einrichtung (1050), die dazu eingerichtet ist, eine ausgewählte Bildschirmposition (P) und eine Zeitdauer (t) einer Auswahloperation an der Bildschirmposition (P) zu detektieren;
- eine Einrichtung (1060) zum Modifizieren von Gewichten der Straßensegmente in Abhängigkeit der detektierten Bildschirmposition (P) und Zeitdauer (t); und
- eine Einrichtung (1070) zum Berechnen einer zur vorausberechneten Route manipulierten Route auf Basis der modifizierten Gewichte.

15. Vorrichtung nach Anspruch 14, ferner umfassend
- einen Datenspeicher (1020) zur Speicherung der kartographischen Daten;
- einen Bildschirm (1080) zum Darstellen der manipulierten Route, der ausgewählten Bildschirmposition (P) und/oder eines kartographischen Bereichs.

16. Navigationsgerät, umfassend die Vorrichtung nach Anspruch 14 oder 15.

## Claims

1. A method for manipulating a route, precalculated by means of cartographic data, on a screen (1080), the cartographic data comprising road segments, to which can be assigned weights for the route calculation, comprising the following steps:
- detecting (S3) a selected screen position (P) and a duration (t) of a selection operation at the screen position (P);
- modifying (S4) weights of the road segments in dependence on the detected screen position (P) and the duration (t); and
- calculating (S5) a route, manipulated in relation to the precalculated route, on the basis of the modified weights.

2. The method according to claim 1, wherein modifying the weights is dependent on a distance (d₁) of the road segments to the selected screen position (P).

3. The method according to claim 2, wherein the strength of modifying the weights increases with the distance (d₁) of the road segments to the selected screen position (P).

4. The method according to one of the preceding claims, wherein modifying the weights is dependent additionally on a distance (d₂) of the road segments to a destination point of the precalculated route.

5. The method according to one of the preceding claims, wherein the duration (t) determines the strength of modifying the weights.

6. The method according to one of the preceding claims, wherein the size of a cartographic region in the vicinity of the selected screen position (P) within which the weights of road segments are modified is set via the duration (t).

7. The method according to claim 6, wherein the extent of the cartographic region increases with the duration (t); and/or
wherein the extent of the cartographic region is limited to a map extract displayed on the screen (1080).

8. The method according to claim 6 or 7, wherein the modified weights within the cartographic region have a lower value in relation to the originally calculated weights.

9. The method according to one of the preceding claims, wherein those road segments which have the lowest values in relation to their weights are preferred when calculating the manipulated route.

10. The method according to one of the preceding claims, further comprising displaying (S6) on the screen (1080) the manipulated route, the selected screen position (P) and/or the cartographic region surrounding the screen position (P); and/or
further comprising scaling the cartographic data displayed on the screen (1080) in dependence on the calculated manipulated route.

11. The method according to one of the preceding claims, wherein the screen (1080) is a touch-sensitive screen (1080) and selecting the screen position (P) is carried out by touching the screen (1080).

12. A Computer program product with program code for carrying out the method according to at least one of the preceding claims when the computer program product is executed on a computer device.

13. The computer program product according to claim 12, which is stored on a computer-readable recording medium.

14. An apparatus for manipulating a route, precalculated by means of cartographic data, on a screen (1080), the cartographic data comprising road segments, to which can be assigned weights for the route calculation, comprising:
- means (1050) configured to detect a selected screen position (P) and a duration (t) of a selection operation at the screen position (P);
- means (1060) for modifying weights of the road segments in dependence on the detected screen position (P) and duration (t); and
- means (1070) for calculating a route, manipulated in relation to the precalculated route, on the basis of the modified weights.

15. The apparatus according to claim 14, further comprising
- a data memory (1020) for storing the cartographic data;
- a screen (1080) for displaying the manipulated route, the selected screen position (P) and/or a cartographic region.

16. A navigation device, comprising the apparatus according to claim 14 or 15.

## Revendications

1. Procédé pour manipuler sur un écran (1080) un itinéraire précalculé à l'aide de données cartographiques, ces données cartographiques comprenant des tronçons de route auxquels peuvent être attribuées des pondérations pour le calcul d'itinéraires, ce procédé comprenant les étapes suivantes :
- la détection (S3) d'une position d'écran (P) sélectionnée et de la durée (t) d'une opération de sélection sur ladite position d'écran (P) ;
- la modification (S4) des pondérations des tronçons de route en fonction de la position d'écran (P) détectée et de la durée (t) ; et
- le calcul (S5), sur la base des pondérations modifiées, d'un itinéraire manipulé par rapport à l'itinéraire précalculé.

2. Procédé selon la revendication 1, la modification des pondérations étant fonction d'une distance (d₁) des tronçons de route par rapport à la position d'écran (P) sélectionnée.

3. Procédé selon la revendication 2, l'intensité de la modification des pondérations augmentant à mesure que s'accroît la distance (d1) des tronçons de route par rapport à la position d'écran (P) sélectionnée.

4. Procédé selon l'une des revendications précédentes, la modification des pondérations des tronçons de route étant en outre fonction d'une distance (d₂) des tronçons de route par rapport à un point de destination sur l'itinéraire précalculé.

5. Procédé selon l'une des revendications précédentes, la durée (t) déterminant l'intensité de la modification des pondérations.

6. Procédé selon l'une des revendications précédentes, la taille d'une zone cartographique dans l'environnement de la position d'écran (p) sélectionnée étant définie par le biais de la durée (t) pendant laquelle sont modifiées les pondérations des tronçons de route.

7. Procédé selon la revendication 6, l'étendue de la zone cartographique augmentant à mesure qu'augmente ladite durée (t), et/ou l'étendue de la zone cartographique étant limitée à un extrait de carte représenté à l'écran (1080).

8. Procédé selon la revendication 6 ou 7, les pondérations modifiées à l'intérieur de la zone cartographique présentant une valeur plus faible par rapport aux pondérations initialement calculées.

9. Procédé selon l'une des revendications précédentes, les tronçons de route favorisés lors du calcul de l'itinéraire manipulé étant ceux qui présentent les valeurs les plus faibles par rapport à leurs pondérations.

10. Procédé selon l'une des revendications précédentes, comprenant en outre une représentation (S6) à l'écran (1080) de l'itinéraire manipulé, de la position d'écran (P) sélectionnée et/ou de la zone cartographique entourant la position d'écran (P) ; et/ou comprenant en outre la mise à l'échelle des données cartographiques représentées à l'écran en fonction de l'itinéraire manipulé calculé.

11. Procédé selon l'une des revendications précédentes, l'écran (1080) consistant en un écran tactile (1080), et la sélection de la position d'écran (P) s'effectuant par effleurement de l'écran (1080).

12. Produit logiciel avec code de programmation pour la mise en oeuvre du procédé selon au moins une des revendications précédentes lorsque le produit logiciel est exécuté sur un ordinateur.

13. Produit logiciel selon la revendication 12, lequel est enregistré sur un support d'enregistrement lisible par ordinateur.

14. Dispositif pour manipuler sur un écran (1080) un itinéraire précalculé à l'aide de données cartographiques, ces données cartographiques comprenant des tronçons de route auxquels peuvent être attribuées des pondérations pour le calcul d'itinéraire, ce dispositif comportant:
- un dispositif (1050) conçu pour détecter une position d'écran (P) sélectionnée et la durée (t) d'une opération de sélection sur la position d'écran (P) ;
- un dispositif (1060) pour modifier les pondérations des tronçons de route en fonction de la position d'écran (P) détectée et de la durée (t)
- un dispositif pour calculer, sur la base des pondérations modifiées, un itinéraire manipulé par rapport à l'itinéraire précalculé.

15. Dispositif selon la revendication 14, comprenant en outre
- une mémoire de données (1020) pour l'enregistrement des données cartographiques ;
- un écran (1080) pour la représentation de l'itinéraire manipulé, de la position d'écran (P) sélectionnée et/ou d'une zone cartographique.

16. Appareil de navigation, comportant le dispositif selon la revendication 14 ou 15.
